# EUROPÄISCHE PATENTSCHRIFT

(11) **EP 2 705 360 B1**
(45) Veröffentlichungstag und Bekanntmachung des Hinweises auf die Patenterteilung: **28.06.2017**
(21) Anmeldenummer: 13701389.2
(22) Anmeldetag: 11.01.2013
(51) Int. Cl.: G01N 27/90

(54) **DURCHLAUFSPULENANORDNUNG, PRÜFVORRICHTUNG MIT DURCHLAUFSPULENANORDNUNG UND PRÜFVERFAHREN**
RUN-THROUGH COIL ARRANGEMENT, MEASURING APPARATUS WITH RUN-THROUGH COIL ARRANGEMENT AND CORRESPONDING MEASURING METHOD
AGENCEMENT DE BOBINES A PASSAGE TRAVERSANT, APPAREIL DE MESURE AVEC AGENCEMENT DE BOBINES A PASSAGE TRAVERSANT ET PROCEDE DE MESURE

(30) Priorität: 23.02.2012 DE 102012202800; 05.12.2012 EP 12195748
(43) Veröffentlichungstag der Anmeldung: 12.03.2014
(73) Patentinhaber: Institut Dr. Foerster GmbH & Co. KG, 72766 Reutlingen (DE)
(72) Erfinder: BÖCKER, Matthias, 72760 Reutlingen (DE); HADITSCH, Franz, 72762 Reutlingen (DE); KOCH, Stefan, 72406 Bisingen (DE)
(74) Vertreter: Patentanwälte Ruff, Wilhelm, Beier, Dauster & Partner mbB
(86) Internationale Anmeldenummer: PCT/EP2013/050470
(87) Internationale Veröffentlichungsnummer: WO 2013/124087

(56) Entgegenhaltungen:
- AT-A1- 502 976
- DE-A1- 4 438 171
- DE-C1- 10 135 660
- DE-U1- 8 012 257
- GB-A- 516 753
- US-A1- 2007 205 764

## Beschreibung

### Gebiet der Erfindung

Die Erfindung bezieht sich auf eine Durchlaufspulenanordnung zur Verwendung in einer Prüfvorrichtung zum Prüfen von Langprodukten im Durchlaufverfahren mittels Wirbelstrom gemäß dem Oberbegriff von Anspruch 1, auf ein Prüfverfahren zur Prüfung von Langprodukten mittels Wirbelstrom gemäß dem Oberbegriff von Anspruch 12 sowie auf eine Prüfvorrichtung mit einer solchen Durchlaufspulenanordnung.

### Stand der Technik

Langprodukte sind langgestreckte metallische Gegenstände, wie beispielsweise Drähte, Stäbe, Stangen oder Rohre o. dgl. Solche Langprodukte können als Ausgangsmaterialien für hochwertige Endprodukte dienen und unterliegen häufig höchsten Qualitätsanforderungen. Die Prüfung auf Materialfehler, beispielsweise auf oberflächennahe Risse, Lunker, Schalen oder andere Materialinhomogenitäten (im Folgenden auch Fehler oder Defekte genannt), bildet einen wichtigen Teil der Qualitätskontrolle dieser Produkte. Dabei wird in der Regel eine möglichst lückenlose Prüfung der Materialoberfläche mit hoher Auflösung angestrebt, die nach Möglichkeit am Herstellungsort im Takt und mit der Geschwindigkeit des Herstellungsprozesses durchführbar sein soll. Derartige Prüfungen werden heutzutage vielfach unter Nutzung elektromagnetischer Methoden, insbesondere der Wirbelstromtechnik, im Durchlaufverfahren durchgeführt. Bei einer Prüfung im Durchlaufverfahren wird ein zu prüfender Gegenstand (Prüfgegenstand, Prüfling) mit vorgebbarer, ggf. relativ hoher Durchlaufgeschwindigkeit durch einen mit entsprechender Sensorik ausgestatteten Prüfabschnitt einer Prüfvorrichtung bewegt und dabei geprüft.

Bei der zerstörungsfreien Werkstoffprüfung im Wirbelstromverfahren wird durch eine mit Wechselstrom betriebene Erregerspule in dem zu prüfenden Material ein elektrischer Wechselstrom (Wirbelstrom) geeigneter Orientierung, Größe und Frequenz induziert und die entstehenden Unregelmäßigkeiten des Wirbelstroms werden mit Hilfe von Sensoren, z.B. einer Spulenanordnung, erfasst und ausgewertet.

Bei der Wirbelstromprüfung wird der Effekt ausgenutzt, dass die meisten Verunreinigungen oder Defekte in einem elektrisch leitfähigen Material eine andere elektrische Leitfähigkeit und/oder eine andere Permeabilität als das Prüfmaterial selbst haben. Das auszuwertende Messsignal ist vor allem von der Leitfähigkeit und Permeabilität des Prüflingsmaterials und vom Abstand zwischen dem Wirbelstromsensor und der Materialoberfläche bestimmt, wobei mit zunehmendem Abstand des Sensors von der Materialoberfläche die absolute Stärke des Fehlersignals und auch das Verhältnis zwischen Nutzsignal und Störsignalen (Nutz/Stör-Verhältnis, S/N-Ratio) abnimmt.

Bei einer Klasse von Prüfvorrichtungen für das Durchlaufverfahren wird eine den Prüfgegenstand umfassende Durchlaufspulenanordnung eingesetzt, durch die der zu prüfende Gegenstand (das Langprodukt) hindurchgeführt wird. Eine Durchlaufspulenanordnung hat eine Erregerspulenanordnung mit einer Erregerspule, die eine Durchlassöffnung zum Hindurchführen eines langgestreckten Gegenstandes entlang einer Durchlaufrichtung umschließt. Die Erregerspulenanordnung hat eine Anschlusseinrichtung zum Anschluss der Erregerspule an eine Wechselspannungsquelle. Weiterhin ist eine um die Durchlassöffnung herum angeordnete Empfängerspulenanordnung vorgesehen, die eine Anschlusseinrichtung zum Anschluss der Empfängerspulenanordnung an eine Auswerteeinrichtung der Prüfvorrichtung aufweist. Die Erregerspulenanordnung und die Empfängerspulenanordnung werden über die Anschlusseinrichtungen an die elektrischen bzw. elektronischen Komponenten der Prüfvorrichtung angeschlossen. Derartige umfassende Durchlaufspulenanordnungen sind in der Regel relativ kostengünstig herstellbar und aufgrund ihrer Robustheit auch unter harten Umgebungsbedingungen zuverlässig und wirtschaftlich einsetzbar.

In der Patentschrift DE 101 35 660 C1 wird eine gattungsgemäße Durchlaufspulenanordnung beschrieben, mit der es auf wirtschaftliche Weise möglich sein soll, bahnartige Fehler sicher aufzufinden, eine deutliche Fehlerauflösung zu gewährleisten und eine gute Reproduzierbarkeit des Prüfergebnisses zu sichern. Die Durchlaufspulenanordnung hat ein den zu prüfenden Gegenstand außenseitig umfassendes Messelement in Form von mindestens drei den Gegenstand mit einem mittleren radialen Abstand kreisringförmig umgebenden Segment-Messspulen aus Streifenleitern in Differenz- oder Multidifferenzschaltung. Diese Segment-Messspulen überlappen sich in Umfangsrichtung mit ihren einander benachbarten Endabschnitten und sind mit einer Mehrkanalauswerteelektronik gekoppelt. Außerdem sind die Segment-Messspulen von einer Absolutspule umgeben, die ihrerseits wiederum von einer allen Messspulen zugeordneten Erregerspule umgeben ist. Die Absolutspule kann unter konfigurativer Anpassung an die Segment-Messspulen ebenfalls segmentiert sein, wobei sich dann die Segment-Absolutspulen mit ihren Endabschnitten überlappen. Dadurch, dass sich die Spulenwirkflächen der Segment-Messspulen in Umfangsrichtung überlappen, soll eine reale 100%ige Abdeckung der Oberfläche des zu prüfenden Gegenstands mit gleichen Empfindlichkeiten erzielt werden.

### AUFGABE UND LÖSUNG

Es ist eine Aufgabe der Erfindung, eine gattungsgemäße Durchlaufspulenanordnung zur Verwendung in einer Prüfvorrichtung zum Prüfen von Langprodukten im Durchlaufverfahren bereitzustellen, die bei kostengünstigem und robustem Aufbau aussagekräftige Prüfergebnisse über Defekte und andere Unregelmäßigkeiten im durchlaufenden Prüfgegenstand bereitstellen kann. Es ist eine weitere Aufgabe, ein Prüfverfahren sowie eine Prüfvorrichtung bereitzustellen, die mit einer solchen Durchlaufspulenanordnung arbeiten.

Zur Lösung dieser Aufgaben wird eine Durchlaufspulenanordnung mit den Merkmalen von Anspruch 1 bereitgestellt. Weiterhin werden ein Prüfverfahren mit den Merkmalen von Anspruch 12 sowie eine Prüfvorrichtung mit den Merkmalen von Anspruch 15 bereitgestellt.

Vorteilhafte Weiterbildungen sind in den abhängigen Ansprüchen angegeben. Der Wortlaut sämtlicher Ansprüche wird durch Bezugnahme zum Inhalt der Beschreibung gemacht.

Die Empfängerspulenanordnung hat zwei oder mehr über den Umfang der Durchlassöffnung verteilte Segmentspulenanordnungen. Jede der Segmentspulenanordnungen hat einen Erfassungsbereich, der nur einen Teil des gesamten Umfangs der Oberfläche des Langprodukts, also ein Umfangssegment abdeckt. Eine solche Durchlaufspulenanordnung hat eine gemeinsame Erregung für zwei oder mehr Segmentspulenanordnungen, die jeweils nur einen Teil bzw. ein Segment des Umfangs des Prüflings abdecken. Alle von den einzelnen Segmentspulenordnungen gelieferten Signale basieren also auf der gleichen Erregung und sind insoweit unmittelbar untereinander vergleichbar. Gleichzeitig ermöglicht die Segmentierung bzw. Aufteilung der Empfängerspulenanordnung in mehrere Segmentspulenanordnungen, dass auftretende Fehlersignale einen bestimmten Umfangsabschnitt der Gegenstandsoberfläche zugeordnet werden können. Somit ist eine Lokalisierung von Defekten nicht nur, wie bei herkömmlichen Durchlaufspulenanordnungen, in Längsrichtung des Gegenstandes möglich, sondern auch in Umfangsrichtung. Die Vorteile konventioneller Durchlaufspulenanordnungen hinsichtlich Robustheit und Zuverlässigkeit können dabei erhalten bleiben.

Bei der beanspruchten Erfindung ist vorgesehen, dass die Segmentspulenanordnungen auf mindestens zwei die Durchlassöffnung umschließenden Schalen mit unterschiedlichen Abständen zu einer Referenzachse der Durchlaufspulenanordnung verteilt sind. Dabei sind erste Segmentspulenanordnungen ohne gegenseitige Überlappung in Umfangsrichtung auf einer ersten Schale angeordnet. Zweite Segmentspulenanordnungen sind dagegen ohne gegenseitige Überlappung in Umfangsrichtung auf einer zweiten Schale angeordnet. Da zwischen den Schalen ein Abstand in Radialrichtung zur Referenzachse besteht, haben die ersten Segmentspulenanordnungen einen anderen Abstand zur Referenzachse als die zweiten Segmentspulenanordnungen. Der Begriff "Schale" bezeichnet hierbei eine in Umfangsrichtung um die Referenzachse herum verlaufende Fläche, deren Flächensegmente parallel zur Referenzachse ausgerichtet sind und in Umfangsrichtung abschnittsweise oder durchgehend gekrümmt sind.

Der radiale Abstand einer Fläche zur Referenzachse folgt einer vorgegebenen Abstandsfunktion. Dadurch, dass alle Segmentspulenanordnungen einer Schale auf dieser Schale liegen, ist der radiale Abstand zur Referenzachse an jeder Stelle jeder Segmentspulenanordnung einer Schale über die Abstandsfunktion genau definiert. Die Segmentspulenanordnungen einer Schale sind ohne gegenseitige Überlappung auf ihrer jeweiligen Schale angeordnet. Sie können in Umfangsrichtung direkt aneinander angrenzen. In der Regel besteht jedoch in Umfangsrichtung ein Abstand zwischen den einander zugewandten Enden benachbarter Segmentspulenanordnungen.

Bei definiertem Abstand der ersten und der zweiten Schale zueinander ist eine unmittelbare Vergleichbarkeit der Signale der ersten und der zweiten Segmentspulenanordnungen gegeben, da die erzeugten Fehlersignale in der Regel ein charakteristisches Abstandsverhalten zeigen und somit anhand von bekannten Abstandsfunktionen miteinander verglichen werden können.

Die Anordnung auf zwei oder mehr in Durchlaufrichtung überlappenden Schalen erlaubt dabei eine genaue Zuordnung auftretender Fehlersignale zu einem axialen Ort entlang des geprüften Langprodukts.

Die Vermeidung von gegenseitiger Überlappung in Umfangsrichtung wird als vorteilhaft angesehen. Nach den Beobachtungen der Erfinder weichen in Überlappungsbereichen von Segmentspulenanordnungen, die in nominell gleichem Abstand zur Referenzachse liegen sollen, die für die Prüfung maßgeblichen Abstände der signalerzeugenden Spulenanordnungen zur Prüflingsoberfläche von denjenigen außerhalb der Überlappungsbereiche ab, so dass sich Messungenauigkeiten ergeben können. Diese werden bei Vermeidung von gegenseitiger Überlappung vermieden.

Um dennoch eine in Umfangsrichtung lückenlose Prüfung zu ermöglichen, sind erste und zweite Segmentspulenanordnungen in Umfangsrichtung derart versetzt zueinander angeordnet, dass zwischen ersten Segmentspulenanordnungen liegende Umfangsabschnitte von zweiten Segmentspulenanordnungen teilweise oder vollständig erfassbar sind. Mit anderen Worten: erste und zweite Segmentspulenanordnungen sind in Umfangsrichtung derart umfangsversetzt zueinander angeordnet, dass die zweiten Segmentspulenanordnungen Umfangsabschnitte erfassen, welche nicht von den ersten Segmentspulenanordnungen abgedeckt werden. Die ersten und die zweiten Segmentspulenanordnungen decken also unterschiedliche Umfangsabschnitte des zu prüfenden Langprodukts ab, wobei sich die Erfassungsbereiche insgesamt so ergänzen und gegebenenfalls teilweise überlappen, dass eine in Umfangsrichtung lückenlose Prüfung möglich ist.

Gemäß einer anderen Formulierung sind die jeweiligen Segmentspulenanordnungen ohne gegenseitige Überlappung auf ihren zugehörigen Schalen angeordnet und die jeweiligen Segmentspulenanordnungen sind auf den verschiedenen Schalen derart in Umfangsrichtung umfangsversetzt zueinander angeordnet, dass der komplette Umfang durch die Segmentspulenanordnungen aller Schalen abgedeckt wird.

Vorzugsweise sind Segmentspurenanordnungen auf genau zwei Schalen, d.h. auf eine erste Schale und genau eine zweite Schale, verteilt. Hierdurch ergibt sich in konstruktiver Hinsicht ein Aufbau mit geringer Komplexität und es reicht aus, die von den Segmentspulenanordnungen erzeugten Signale nur zwei Abstandsfunktionen zuzuordnen. Es ist jedoch auch möglich, Segmentspulenanordnungen auf mehr als zwei Schalen zu verteilen, beispielsweise auf drei, vier, fünf oder sechs Schalen, zwischen denen jeweils ein Abstand in Radialrichtung besteht. Es kann dabei sein, dass die vollständige Überdeckung des Umfangs erst durch die Kombination von Segmentspulenanordnungen von drei oder mehr Schalen erreicht wird.

Bei manchen Ausführungsformen sind erste Segmentspulenanordnungen in einem ersten radialen Abstand zur Referenzachse auf einer kreiszylindrischen ersten Schale angeordnet und zweite Segmentspulenanordnungen in einem vom ersten radialen Abstand abweichenden zweiten radialen Abstand zur Referenzachse auf einer kreiszylindrischen zweiten Schale angeordnet. Wenn die Querschnittsform Zentralsymmetrie zu einem Symmetriezentrum aufweist, kann die Achse durch das Symmetriezentrum als zentrale Referenzachse oder Zentralachse bezeichnet werden. Bei derartigen Ausführungsformen bilden die Schalen jeweils Kreiszylinder-Mantelflächen koaxial zur Zentralachse der Durchlaufspulenanordnung. Ausführungsformen mit kreisrundem Querschnitt sind beispielsweise für die Prüfung von Rundmaterial (Langprodukt mit kreisrundem Querschnitt, massiv oder als Rohr) vorteilhaft, können aber bei geeigneter Signalauswertung auch zur Prüfung von Langprodukten mit polygonalem Querschnitt verwendet werden.

Bei alternativen Ausführungsformen können die Schalen eine von der Kreisform abweichende Querschnittsform haben. Beispielsweise sind Schalen mit ovalem Querschnitt oder eiförmigem Querschnitt möglich. Es ist auch möglich, dass die Schalen einen polygonalen Querschnitt haben, beispielsweise einen im Wesentlichen quadratischen Querschnitt mit abgerundetem Eckbereich. Der radiale Abstand zwischen den Schalen und zur Referenzachse muss nicht gleichmäßig sein, sondern kann in Umfangsrichtung variieren.

Um zu große Sensitivitätsunterschiede zwischen Segmentspulenanordnungen unterschiedlicher Schalen zu vermeiden, sollte ein radialer Abstand zwischen der ersten Schale und der zweiten Schale bzw. zwischen benachbarten Schalen höchstens einen Zentimeter betragen, wobei der Abstand vorzugsweise bei 1 mm oder darunter, insbesondere zwischen 0.1 mm und 1 mm liegen sollte. Größere Abstände sind möglich, Signalstärkeunterschiede können dann elektronisch oder rechnerisch ausgeglichen bzw. berücksichtigt werden.

Die Anzahl von Segmentspulenanordnungen pro Schale kann der Prüfaufgabe angepasst sein. Es ist möglich, dass die Anzahl von Segmentspulenanordnungen auf jeder Schale die gleiche ist. Auf den Schalen können auch ungleiche Anzahlen von Segmentspulenanordnungen vorgesehen sein.

Häufig ist es von Vorteil, wenn auf einer Schale eine gerade Anzahl von Segmentspulenanordnungen angeordnet ist, beispielsweise zwei, vier, sechs oder acht Segmentspulenanordnungen. Alternativ oder zusätzlich können auf einer Schale ein Paar oder mehrere Paare von diametral gegenüberliegenden Segmentspulenanordnungen vorgesehen sein. Das kann für einzelne, mehrere oder alle Schalen gelten.

Im Allgemeinen kann die Empfängerspulenanordnung mehrere Paare von diametral gegenüberliegenden Segmentspulenanordnungen aufweisen. Hierdurch können sich Vorteile bei der Signalauswertung ergeben. Diese Maßnahme kann bei Durchlaufspulenanordnungen mit Schalenaufbau (gemäß der beanspruchten Erfindung) oder bei gattungsgemäßen Durchlaufspulenanordnungen ohne Schalenaufbau vorteilhaft sein.

Angepasst an den jeweiligen Verwendungszweck sind unterschiedliche Ausgestaltungen von Segmentspulenanordnungen möglich. Eine Segmentspulenanordnung kann ausschließlich eine oder mehrere Differenzspulenanordnungen, ausschließlich eine oder mehrere Absolutspulenanordnungen oder eine Kombination aus mindestens einer Differenzspulenanordnung und mindestens einer Absolutspulenanordnung aufweisen.

Der Begriff "Differenzspulenanordnung" soll hierbei sowohl Einfach-Differenzspulenanordnungen als auch Mehrfach-Differenzspulenanordnungen umfassen. Die von einer Differenzspulenanordnung erzeugten elektrischen Signale werden typischerweise als Differenzsignale bezeichnet.

Eine Absolutspulenanordnung liefert Absolutsignale. Diese können bei entsprechender Auswertung zur Fehlerdetektion genutzt werden. Da die Amplitude von Absolutsignalen stark und in charakteristischer Weise vom Abstand zwischen Absolutspulenanordnung und Prüflingsoberfläche abhängt, kann eine Absolutspulenanordnung bei entsprechender Auswertung der Absolutsignale als Abstandssensor dienen, wenn sie für den Betrieb an eine Abstandsauswerteeinrichtung angeschlossen wird und die Absolutsignale entsprechend als Abstandssignale ausgewertet werden (vgl. z.B. DE 44 38 171 A1).

Vorzugsweise haben alle Segmentspulenanordnungen jeweils mindestens eine Differenzspulenanordnung. Der Begriff "Differenzspulenanordnung" bezeichnet dabei eine Spulenanordnung, welche zwei oder mehr Teilspulenanordnungen aufweist, die gegensinnig wirken. Dadurch erzeugt eine Änderung des eine Differenzspulenanordnung durchtretenden magnetischen Feldes nur dann ein Signal, wenn die Feldstärkeänderung in den gegensinnig wirkenden Teilspulenanordnungen unterschiedlich ist. Liegen dagegen keine Feldänderungen vor oder wirken die Feldänderungen in den gegensinnig wirkenden Teilspurenanordnungen gleich stark, so ergibt sich kein Ausgangssignal. Mit Hilfe von Differenzspulenanordnungen ist eine besonders empfindliche Fehlerdetektion auch bei kleinen Fehlergrößen möglich. Differenzspulenanordnungen sind vorzugsweise so angeordnet, dass am gesamten Umfang des Prüflings Differenzsignale erfasst werden können, so dass eine in Umfangsrichtung lückenlose Prüfung mittels Differenzspulenanordnungen möglich ist.

Vorzugsweise hat eine Segmentspulenanordnung zusätzlich zu einer Differenzspulenanordnung auch eine Absolutspulenanordnung. Dies kann für alle Segmentspulenanordnungen oder nur für einen Teil der Segmentspulenanordnungen vorgesehen sein. Der Begriff "Absolutspulenanordnung" bezeichnet hierbei eine Spulenanordnung, die bei Änderung des durchtretenden magnetischen Feldes ein Ausgangssignal (Absolutsignal) liefert. Eine Absolutspulenanordnung kann mehrere Teilspulenanordnungen aufweisen. Diese sind jedoch im Gegensatz zu einer Differenzspulenanordnung in Bezug auf das durchtretende magnetische Feld gleichsinnig geschaltet, so dass auch eine Feldänderung in mehreren Teilspulenanordnungen jeweils ein Signal erzeugt, wobei sich diese Signale am Ausgang der Absolutspulenanordnung addieren.

Diese Maßnahme kann bei Durchlaufspulenanordnungen mit Schalenaufbau (gemäß der beanspruchten Erfindung) und bei gattungsgemäßen Durchlaufspulenanordnungen ohne Schalenaufbau vorteilhaft sein.

Mit einer Differenzspulenanordnung können z.B. Lochfehler und Querfehler mit hoher Empfindlichkeit erfasst werden. Außerdem können Längsfehler entsprechend ihrem Tiefengradienten beurteilt werden. Mit Hilfe einer Absolutspulenanordnung ist es u.a. möglich, gleichmäßige Längsfehler in ihrer vollen Länge zu erfassen. Die gleichzeitige Erfassung von Differenzsignalen und Absolutsignalen erlaubt eine zuverlässigere Qualifizierung der Defekttypen.

Mit einer Absolutspulenanordnung sind darüber hinaus auch Abstandssignale erfassbar, so dass aus Signalanteilen der Absolutspulenanordnung Informationen über den Abstand zwischen der Segmentspulenanordnungen und der Prüflingsoberfläche, d.h. den Prüfabstand, abgeleitet werden können. Diese Abstandssignale können z.B. auf der elektronischen Seite oder softwareseitig zur Abstandskompensation genutzt werden, um beispielsweise bei exzentrischer Prüfteillage die Vergleichbarkeit von an unterschiedlichen Segmenten erfassten Fehlersignalen zu verbessern.

Vorzugsweise sind eine Differenzspulenanordnung und eine Absolutspulenanordnung an einem gemeinsamen Trägerelement angeordnet. Dadurch kann die relative Position dieser Spulenanordnungen zueinander mechanisch genau festgelegt werden. Bei manchen Ausführungsformen hat das Trägerelement eine (dem durchlaufenden Prüfgut zugewandte) innere Oberfläche und eine äußere Oberfläche, wobei eine Differenzspulenanordnung und eine Absolutspulenanordnung mindestens teilweise an der gleichen Oberfläche des Trägerelements angeordnet sind. Diejenigen Anteile der Spulenanordnungen, die an der gleichen Oberfläche angeordnet sind, haben den durch die Form der Schale vorgegebenen gleichen Abstand zur Referenzachse der Durchlaufspulenanordnung, so dass ohne Weiteres eine gemeinsame Auswertung der Signale möglich ist.

Diese Maßnahme kann bei Durchlaufspulenanordnungen mit Schalenaufbau (gemäß der beanspruchten Erfindung) und bei gattungsgemäßen Durchlaufspulenanordnungen ohne Schalenaufbau vorteilhaft sein.

Bei manchen Durchlaufspulenanordnungen ist vorgesehen, dass bei einer Segmentspulenanordnung die Differenzspulenanordnung im Wesentlichen symmetrisch zu einer Spulenebene (typischerweise Mittelebene) der Erregerspulenanordnung angeordnet ist und die Absolutspulenanordnung unsymmetrisch zur Spulenebene teilweise oder vollständig in einem inhomogenen Feldbereich des von der Erregerspulenanordnung erzeugten Feldes angeordnet ist. Hierdurch ist eine besonders empfindliche Abstandsdetektion mit Hilfe der Absolutspulenanordnung möglich. Dabei ist zu berücksichtigen, dass die Wicklungen der Absolutspulenanordnung in einer typischerweise gekrümmten Fläche liegen, die senkrecht zur Spulenebene der Erregerspule liegt. Bei der asymmetrischen Anordnung liegt wenigstens ein Teil der signalerzeugenden Wicklungen im inhomogenen Feldbereich, wo das am Ort der Absolutspulenanordnung auftretende magnetische Feld eine radiale Komponente (y-Komponente) hat, welche die Absolutspulenanordnung durchsetzt. Die Stärke dieser Komponente ändert sich signifikant in Abhängigkeit vom Abstand zwischen der Absolutspulenanordnung und der Oberfläche des Langprodukts, welches die Feldlinienverteilung am Ort der Absolutspulenanordnung beeinflusst. Somit ergibt sich eine Anordnung von Absolutwicklungen im Gradientenfeld, welche sich durch radiale Lageveränderungen des Langproduktes beim Durchlaufen ändert. Bei nicht-zentrischer bzw. außermittiger Lage des Langprodukts ergibt sich eine Veränderung des magnetischen Flusses durch die Windungen der Absolutspulenanordnung, die von den als Abstandssonden genutzten Absolutspulenanordnungen registriert werden kann.

Ein besonders starkes und stabiles Abstandssignal wird bei manchen Ausführungsformen dadurch erreicht, dass eine Absolutspulenanordnung symmetrisch zu einer Spulenebene bzw. Mittelebene der Erregerspulenanordnung in einem ersten inhomogenen Feldbereich vor der Spulenebene eine erste Teilspulenanordnung und in einem zweiten inhomogenen Feldbereich hinter der Spulenebene eine zweite Teilspulenanordnung aufweist, wobei die erste und die zweite Teilspulenanordnung gegensinnig geschaltet sind. Die Teilspulenanordnungen werden in unterschiedlichen Feldlinienrichtungen vom inhomogenen Feld durchsetzt. Durch die gegensinnige Schaltung wird erreicht, dass sich die in den Teilspulenanordnungen induzierten Spannungen addieren, so dass starke Abstandssignale resultieren.

Die Segmentierung von als Abstandssensoren genutzten Absolutspulenanordnungen in Verbindung mit der Anordnung im inhomogenen Teil des magnetischen Feldes ergibt segmentierte Abstandsbestimmungssensoren, welche, anders als herkömmliche Absolutspulenanordnungen, nicht die annähernd in Durchgangsrichtung des zu prüfenden Langprodukts verlaufenden Feldlinien ausnutzen, sondern die senkrecht dazu stehenden Komponenten der Magnetfeldlinien. Anhand dieser Magnetfeldlinien wird die Veränderung des Gradientenfeldes in Abhängigkeit von der Lage des zu prüfenden Langprodukts detektiert.

Diese Maßnahmen können bei Durchlaufspulenanordnungen mit Schalenaufbau (gemäß der beanspruchten Erfindung) und bei gattungsgemäßen Durchlaufspulenanordnungen ohne Schalenaufbau vorteilhaft sein.

Die durch die Segmentierung eröffnete Möglichkeit, mit Hilfe der Absolutspulenanordnungen Abstandssignale separat an verschiedenen Umfangsabschnitten des Langproduktes zu erzeugen, erlaubt es, aufgrund der Abstandssignale eine Ortsinformation bezüglich der Lage des Langprodukts innerhalb der Durchlaufspulenanordnung zu erhalten.

Eine gemeinsame Auswertung von Absolutsignalen von paarweise diametral gegenüberliegenden Segmentelementanordnungen ermöglicht z.B. auf besonders einfache Weise die Bestimmung des Prüflingsdurchmessers in der entsprechenden Diagonalrichtung und ggf. auch von Durchmesserschwankungen und/oder Dezentrierungen.

Diese Maßnahmen können bei Durchlaufspulenanordnungen mit Schalenaufbau (gemäß der beanspruchten Erfindung) und bei gattungsgemäßen Durchlaufspulenanordnungen ohne Schalenaufbau vorteilhaft sein.

Die Erfindung betrifft auch ein Prüfverfahren zur Prüfung von Langprodukten, bei dem ein Langprodukt entlang einer Durchlaufrichtung durch eine Durchlaufspurenanordnung der in dieser Anmeldung beschriebenen Art verwendet wird.

Solche Durchlaufspulenanordnungen ermöglichen Auswerteverfahren, die mit konventionellen Durchlaufspulenanordnungen nicht möglich sind.

Bei manchen Ausführungsformen findet beispielsweise eine gemeinsame Auswertung von Signalen von paarweise diametral gegenüberliegenden Segmentspulenanordnungen statt.

Bei einer Variante umfasst die gemeinsame Auswertung die Ermittlung eines Summensignals und/oder eines Differenzsignals von Abstandssignalen bzw. Absolutsignalen der paarweise diametral gegenüberliegenden Segmentspulenanordnungen. Durch die Auswertung kann sowohl der Durchmesser als auch die Exzentrizität bestimmt werden.

Durch Auswertung von Abstandssignalen mehrerer (z.B. drei, vier, fünf oder sechs) umfangsversetzer Absolutspulenanordnungen ist u.a. eine Bestimmung von Durchmesserwerten, Durchmesserschwankungen und/oder Dezentrierungen des Prüflings gegenüber der Durchlaufspulenanordnung möglich.

Bei manchen Ausführungsformen wird aus Absolutsignalen mehrerer um den Umfang verteilter Absolutspulenanordnungen eine Information über Durchmesser, Prüfteilgeometrie, Unrundheit und/oder Achsversatz zwischen der Durchlaufspulenanordnung und dem Prüfgegenstand ermittelt.

Ein weiterer Vorteil der Nutzung der Erfindung besteht darin, dass ein Fehlerprotokoll erzeugt werden kann, das eine Zuordnung zwischen einem Fehlersignal und einem korrespondierenden Umfangsabschnitt des geprüften Gegenstands enthält. Diese Information erlaubt eine erheblich verbesserte und präzisierte Bewertung von Defekten. Befindet sich beispielsweise ein prinzipiell nachbearbeitbarer Defekt in einem Umfangsabschnitt, der bei der späteren Verwendung vorhersehbar nicht in kritischer Weise belastet wird, kann eine Nachbearbeitung eingespart werden. Wenn eine Nachbearbeitung erforderlich ist, so ist aufgrund des Fehlerprotokolls der fehlerbehaftete Bereich bereits auf einen relativ kleinen Umfangsabschnitt eingegrenzt, so dass die Fehler leichter auffindbar sind. Bei nicht nachbearbeitbaren Fehlern kann aufgrund des Fehlerprotokolls entschieden werden, ob sich diese in einem kritischen oder ggf. in einem unkritischen Umfangsabschnitt befinden, so dass über die weitere Verwendung des Prüflings präziser als bisher entschieden werden kann. Diese kann z.B. bei geschweißten Rohren zur unterschiedlichen Bewertung von Naht- und Wandfehlern und bei polygonalen Profilen zur angemessenen Bewertung von Kanten- und Flächenfehlern sinnvoll sein. Die Unterscheidungen und ihre Gewichtung sind besonders wichtig, um rechtzeitig in einen Fertigungsprozess eingreifen zu können, um noch zu fertigendes Material fehlerfrei zu produzieren.

Das Fehlerprotokoll kann auch Daten über Durchmesser, Prüfteilgeometrie und/oder Unrundheit des Prüfgegenstandes als Funktion der Position in Längsrichtung enthalten.

In Verbindung mit dem Schalenaufbau der Durchlaufspulenanordnung können besonders präzise Prüfungsergebnisse erzielt werden. Grundsätzlich sind diese Maßnahmen bei Durchlaufspulenanordnungen mit Schalenaufbau (gemäß der beanspruchten Erfindung) und teilweise auch bei gattungsgemäßen Durchlaufspulenanordnungen ohne Schalenaufbau vorteilhaft nutzbar.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele der Erfindung sind in den Zeichnungen dargestellt und werden im Folgenden näher erläutert.

### KURZBESCHREIBUNG DER ZEICHNUNGSFIGUREN

- Fig. 1: zeigt eine schrägperspektivische Ansicht einer Ausführungsform einer erfindungsgemäßen Durchlaufspulenanordnung mit einem durch die Durchlassöffnung laufenden Prüfgegenstand;
- Fig. 2: zeigt eine schematische axiale Ansicht der Durchlaufspulenanordnung aus Fig. 1;
- Fig. 3: zeigt einen Längsschnitt durch eine kreiszylindrisch geformte Erregerspule mit Symbolen zum Verlauf von magnetischen Feldlinien;
- Fig. 4: zeigt Details zum Feldverlauf um eine Erregerspule;
- Fig. 5: zeigt eine schrägperspektivsche Ansicht einer Ausführungsform einer Segmentspulenanordnung;
- Fig. 6: zeigt verschiedene Varianten von Schalenanordnungen mit Differenz- und Absolutspulenanordnungen; und
- Fig. 7: zeigt eine Ausführungsform einer Durchlaufspulenanordnung mit annähernd quadratischer Querschnittsform.

### DETAILLIERTE BESCHREIBUNG BEVORZUGTER AUSFÜHRUNGSFORMEN

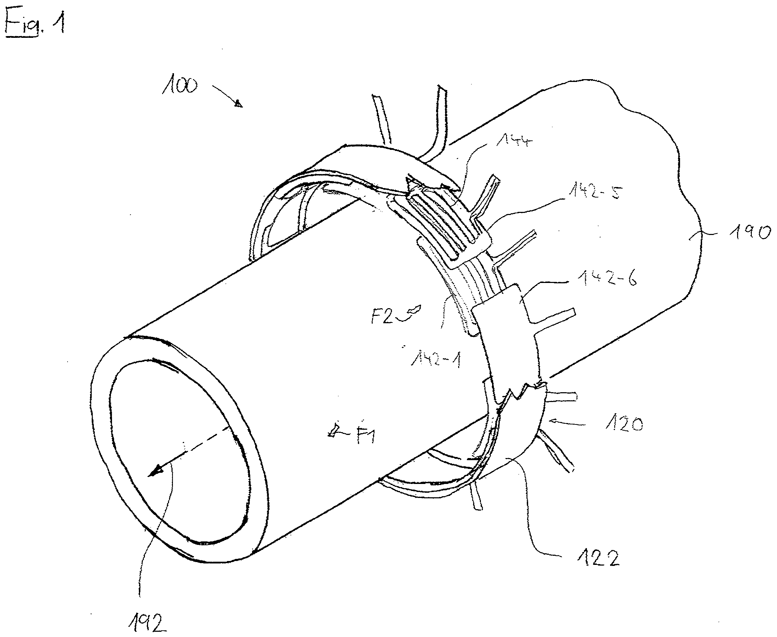

Die schematische schrägperspektivische Darstellung in Fig. 1 zeigt Komponenten einer Prüfvorrichtung zur zerstörungsfreien Wirbelstromprüfung von langgestreckten elektrisch leitenden Gegenständen bzw. Langprodukten im Durchlaufverfahren. Im gezeigten Beispiel ist der zu prüfende Gegenstand (Prüfgegenstand, Prüfling) ein Metallrohr 190, das mit einer Durchlaufgeschwindigkeit bis in die Größenordnung von einigen m/s entlang einer Durchlaufrichtung 192 durch einen Prüfabschnitt der Prüfvorrichtung gefördert wird. Die Prüfvorrichtung kann dabei in eine Fertigungslinie, beispielsweise eine Rohr-Schweißlinie, integriert sein. Es ist auch möglich, dass die Prüfvorrichtung in einer separaten Prüflinie untergebracht ist, welche eine Prüfstrecke enthält, die den optimalen Transport des Prüfmaterials durch den Prüfabschnitt gewährleistet. Die Prüfstrecke enthält unter anderem Führungseinrichtungen und Positioniereinrichtungen, um sicherzustellen, dass die zentrale Längsachse des Prüfgegenstandes möglichst zentrisch durch den Prüfabschnitt läuft.

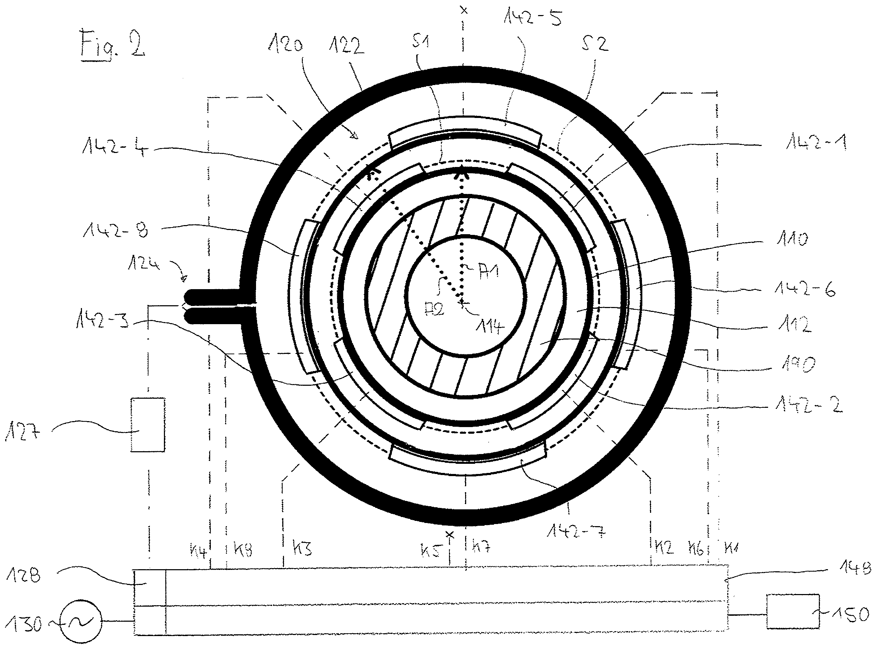

Im Prüfabschnitt ist eine stationäre Durchlaufspulenanordnung 100 angeordnet. Diese umfasst einen in Fig. 2 dargestellten Spulenträger 110, der im Wesentlichen durch eine zylindrische Hülse aus einem elektrisch nicht oder nur geringfügig leitfähigen Material, beispielsweise aus faserverstärktem Kunststoffmaterial, hergestellt ist. Der in Umfangsrichtung geschlossene Spulenträger umschließt eine kreisförmige Durchlassöffnung 112 zum Hindurchführen des zu prüfenden Gegenstandes 190. Im Zentrum der Durchlassöffnung verläuft die Zentralachse 114 der Durchlaufspulenanordnung, die als Referenzachse dient. Der Innendurchmesser des Spulenträgers ist um einige Prozent größer als der Außendurchmesser des größten hindurch zu führenden Prüfgegenstandes, so dass bei allen mit dieser Durchlaufspulenanordnung zu prüfenden Prüfgegenständen mit unterschiedlichen Durchmessern ein Berührungskontakt zwischen Prüfgegenstand und Durchlaufspulenanordnung vermieden wird.

An der Außenseite des Spulenträgers sind die elektrischen Komponenten der Durchlaufspulenanordnung angebracht, nämlich eine Erregerspulenanordnung und eine Empfängerspulenanordnung. Die Erregerspulenanordnung 120 hat eine einzige Erregerspule in Form einer Flachbandspule 122. Diese wird durch ein flaches metallisches Band aus einem elektrisch gut leitfähigen Material, beispielsweise Kupfer, gebildet, welches ringförmig um den Spulenträger bzw. die Durchlassöffnung herum gebogen ist und im Anschlussbereich zwei radial nach außen gebogene Anschlussabschnitte 124 hat, zwischen denen eine Isolierschicht aus elektrisch isolierendem Material angeordnet ist. Die Flachbandspule bildet eine einzige Wicklung, die praktisch über ihren gesamten Umfang (mit Ausnahme des Bereichs der Isolierschicht) geschlossen ist. Die Spulenebene der Erregerspule verläuft senkrecht zur Zentralachse 114. Die in Radialrichtung des gebogenen Flachbandes gemessene Dicke des Flachbandes kann z.B. zwischen 0.5 mm und 1 mm liegen und ist um ein Vielfaches geringer als die parallel zur Zentralachse 114 der Durchlaufspulenanordnung gemessene Breite des Flachbandes, die je nach Durchmesser mehrere Millimeter oder mehrere Zentimeter betragen kann. Die Breite kann beispielsweise mehr als 10% des freien Innendurchmessers der Flachbandspule betragen und liegt im Beispielsfall bei ca. 15% dieses freien Durchmessers. Die beiden Enden der Flachbandspule sind über strichpunktiert dargestellte Leitungen mit einer Anschlusseinrichtung 128 verbunden, über die die Erregerspulenanordnung mit einer Wechselspannungsquelle 130 der Prüfvorrichtung verbunden werden kann. Zur Anpassung der Impedanzen von Erregerelement 122 und der Wechselspannungsquelle 130 kann ein Übertrager 127 zwischengeschaltet sein. Die Erregerspulenanordnung kann mit einer einzigen Erregerfrequenz oder mit mehreren unterschiedlichen Erregerfrequenzen betrieben werden.

Weiterhin ist innerhalb der Erregerspulenanordnung koaxial mit dieser eine um die Durchlassöffnung 112 herum angeordnete Empfängerspulenanordnung vorgesehen, zu der eine Anschlusseinrichtung 148 zum Anschluss der Empfängerspulenanordnung an eine Auswerteeinrichtung 150 der Prüfvorrichtung gehört.

Die Empfängerspulenanordnung hat im Beispielsfall acht über den Umfang der Durchlassöffnung verteilte Segmentspulenanordnungen 142-1 bis 142-8, die in zwei Gruppen mit jeweils vier Segmentspulenanordnungen aufgeteilt sind. Vier erste Segmentspulenanordnungen 142-1 bis 142-4 liegen in einem ersten radialen Abstand A1 zur Zentralachse 114 der Durchlaufspulenanordnung ohne gegenseitige Überlappung auf einer kreiszylindrischen ersten Schale S1. Vier zweite Segmentspulenanordnungen 142-5 bis 142-8 liegen in einem zweiten radialen Abstand A2, welcher größer ist als der erste radiale Abstand A1, ohne gegenseitige Überlappung auf einer zweiten Schale S2 zwischen der ersten Schale S1 und der Erregerspule 122.

Der Unterschied der Abstände A1 und A2 bzw. der radiale Abstand zwischen den Schalen sollte möglichst klein sein, damit die auf unterschiedlichen Schalen erfassten Signale möglichst ähnliche Signalstärke haben können. Der radiale Abstand zwischen den Schalen sollte nach Möglichkeit bei höchstens einem Zentimeter liegen, vorzugsweise bei 1 mm oder darunter, z.B. zwischen 0.1 mm und 1 mm. Die Untergrenze des Abstandes ist in erster Linie fertigungsbedingt.

Jede der gleichmäßig auf der ersten Schale verteilten ersten Segmentspulenanordnungen hat einen Erfassungsbereich, der nur einen Umfangsabschnitt von ca. 50° des Umfangs der Oberfläche des zu prüfenden Gegenstandes abdeckt. In Umfangsrichtung zwischen den ersten Segmentspulenanordnungen verbleiben Lücken. Auch die weiter außerhalb liegenden zweiten Segmentspulenanordnungen decken jeweils nur einen Umfangsabschnitt von ca. 50° des Prüflingsumfangs ab und haben in Umfangsrichtung einen gegenseitigen Abstand zueinander. Die zweiten Segmentspulenanordnungen sind in Bezug auf die ersten Segmentspulenanordnungen so umfangsversetzt angeordnet, dass die zweiten Segmentspulenanordnungen 142-5 bis 142-8 jeweils die zwischen den ersten Segmentspulenanordnungen existierenden Lücken vollständig abdecken und mit beiden Endabschnitten noch über die nächstliegenden Endabschnitte der zugehörigen ersten Segmentspulenanordnungen 142-1 bis 142-4 überlappen. Dadurch bilden die auf zwei Schalen verteilten Segmentspulenanordnungen gemeinsam einen in Umfangsrichtung geschlossenen Ring um die Durchlassöffnung 112.

Jede der Segmentspulenanordnungen ist über einen eigenen Kanal K1 bis K8 und die mehrkanalige Anschlusseinrichtung 148 an die Auswerteeinrichtung 150 angeschlossen, so dass eine separate Auswertung der Prüfsignale aller Segmentspulenanordnungen möglich ist.

In diesem "Schalenmodell" liegen die Windungen bzw. Wicklungen der auf einer gemeinsamen Schale liegenden Segmentspulenanordnungen immer exakt und vollständig in gleichem radialen Abstand zur Zentralachse, also auf dem gleichen Radius. Bei Segmentspulenanordnungen, welche über verschiedene Lagen verfügen, liegt die radiale Mitte des Wirkbereichs auf demselben Radius. Alle Wicklungsbereiche von Segmentspulenanordnungen derselben Schale haben somit aufgrund der geometrischen Anordnung dieselbe Empfindlichkeit, wodurch eine unmittelbare Vergleichbarkeit der Sondensignale erreicht wird. Das Schalenmodell beseitigt dabei ein bisher unbeachtetes Problem, welches bei solchen Lösungen auftreten kann, bei denen auf einem gemeinsamen Radius liegende Segmentspulenanordnungen mit ihren Endbereichen gegenseitig überlappen. Bei einem Abstandsverhalten von einigen dB pro Millimeter Abstand bei der Fehleranalyse können bei konventionellen Lösungen mit gegenseitiger Überlappung Unterschiede von über einem dB auftreten. Hierdurch wird die Interpretierbarkeit der Messsignale verschlechtert. Derart kritische Überlappungen werden vermieden.

Bei dem Schalenmodell haben die Segmentspulenanordnungen der unterschiedlichen Schalen aufgrund der Abstandsdifferenz A2 - A1 Sensitivitätsunterschiede. Innerhalb einer Schale ergeben sich aber aufgrund der Vermeidung gegenseitiger Überlappungen keine Sensitivitätsunterschiede. Durch die Kenntnis des Abstandsverhaltens der Sensitivität der Segmentspulenanordnungen können diese Sensitivitätsunterschiede elektronisch oder mit Hilfe geeigneter Auswertungssoftware behoben werden.

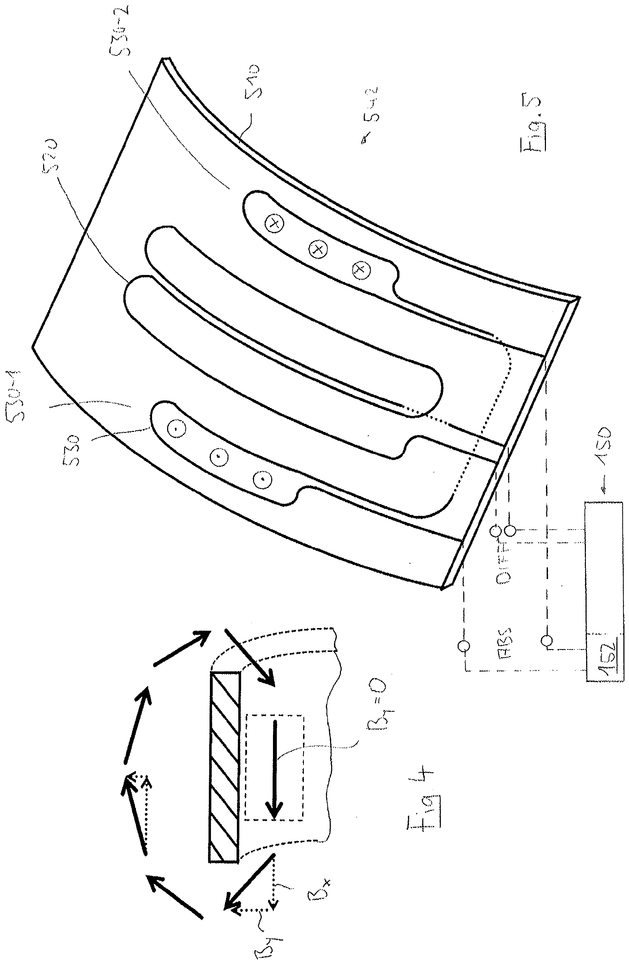

Die Segmentspulenanordnungen sind jeweils als Flachspulenanordnungen ausgebildet in dem Sinne, dass die laterale Ausdehnung einer Spulenanordnung in einer zylindrisch gekrümmten Fläche wesentlich größer ist als die senkrecht zu dieser Fläche gemessene Ausdehnung. Die Spulen werden dabei durch in Leiterplattentechnik erzeugte Leiterbahnen 144 gebildet, die auf einem flexiblen, elektrisch nicht leitenden Trägermaterial aufgebracht wurden (vgl. Fig. 5). Bei der Herstellung der Durchlaufspulenanordnung werden die mit Leiterbahnen versehenen Träger der inneren (ersten) Segmentspulenanordnungen direkt auf die zylindrisch gekrümmte Außenseite des Spulenträgers 110 gelegt und dort z.B. mittels Kleber befestigt. Die äußeren (zweiten) Segmentspulenanordnungen können mit ihrem Träger direkt darauf aufgebracht sein, um einen möglichst kleinen radialen Abstand der Schalen zu erreichen. Es ist auch möglich, Spulenträger mit radialem Abstand zueinander anzuordnen.

Die Anschlussenden der Leiterbahnen verlaufen jeweils gegeneinander isoliert auf einem schmalen angeformten Anschlussstreifen, welcher über geeignete Kabel mit der Anschlusseinrichtung 148 verbunden werden kann. Zwischen den Spulen der Segmentspulenanordnungen 142-1 bis 142-8 und der Anschlusseinheit 148 können Verstärkereinheiten eingefügt sein, die die Signale verstärken und/oder eine Entkopplung der induktiven Spulenimpedanz von der überwiegend kapazitiven Kabelimpedanz bewirken.

Bei der zusammengebauten Durchlaufspulenanordnung liegen die Segmentspulenanordnungen zwischen dem Spulenträger 110 und der außen liegenden Erregerspule 122. Zwischen der Außenseite des Prüfgegenstandes und den jeweiligen Segmentspulenanordnungen besteht ein radialer Prüfabstand, der im Beispielsfall eines kreiszylindrischen Prüfgegenstandes für alle Segmentspulenanordnungen einer Schale gleich ist, wenn der Prüfgegenstand zentrisch durch die Durchlaufspulenanordnung verläuft.

Jede Segmentspulenanordnung 142-1 bis 142-8 weist eine Differenzspulenanordnung sowie eine Absolutspulenanordnung auf. Dadurch kann für jeden Umfangsabschnitt separat sowohl ein Differenzsignal als auch ein Absolutsignal erfasst und dem jeweiligen Umfangsabschnitt zugeordnet werden. Mit Hilfe einer Differenzspulenanordnung sind auch kleine Defekte oder andere Inhomogenitäten in einem ansonsten homogenen elektrisch leitfähigen Grundmaterial zuverlässig detektierbar, da durch axiale Differenzierung von Spulenabschnitten nicht auf Defekte zurückgehende Signalanteile weitgehend kompensiert werden können. Aufgrund der Segmentierung ist dabei eine Ortsauflösung in Umfangsrichtung möglich. Beispielsweise erzeugt der rissartige Defekt F1 am Umfang des Rohres 190 nur in der Segmentspulenanordnung 142-6 der zweiten Schale S2 ein Fehlersignal, da die Bewegungsbahn dieses Fehlers bei Durchlauf des Prüfgegenstandes nur den Erfassungsbereich dieser einen Segmentspulenanordnung durchfährt. Der in Umfangsrichtung und in Axialrichtung versetzte zweite Fehler F2 erzeugt dagegen zu einem späteren Zeitpunkt ein Fehlersignal in der umfangsversetzt angeordneten Segmentspulenanordnung 142-1 der inneren ersten Schale. Die beiden Fehler sind somit sowohl in axialer Richtung als auch in Umfangsrichtung lokalisierbar. Die entsprechenden Fehlersignale werden durch voneinander getrennte Kanäle zur Auswerteeinrichtung 150 geleitet und können dort den jeweiligen Umfangsabschnitten zugeordnet werden.

Mit Hilfe der Absolutspulenanordnung einer Segmentspulenanordnung sind vor allem in Längsrichtung verlaufende gravierende Fehler als Fehlersignal erkennbar. Besonders wichtig ist jedoch hier die Möglichkeit der Nutzung als Abstandssensor. Die Signalstärke des Absolutsignals hängt empfindlich vom Abstand zwischen der Absolutspulenanordnung und der Materialoberfläche ab, wobei mit zunehmendem Abstand der Absolutspulenanordnung von der Materialoberfläche die absolute Stärke des Signals und das Verhältnis zwischen Nutzsignal und Störsignal abnimmt. Über einen gewissen Abstandsbereich ist der Zusammenhang im Wesentlichen linear oder derart gut kalibrierbar, so dass Absolutspulenanordnungen auch als Abstandssensoren genutzt werden können.

Die durch die Absolutspulenanordnungen gebildeten Abstandssensoren sind in der gleichen Ebene senkrecht zur Durchlaufrichtung angeordnet wie die Differenzspulenanordnungen, mit denen die Fehlersignale erfasst werden. Die Auswerteeinrichtung 150 umfasst eine Abstandsauswerteeinrichtung und ist so konfiguriert, dass die aus den Signalen der Absolutspulenanordnung ableitbaren Abstandsinformationen für verschiedene Auswertezwecke weiterverarbeitet werden können.

Im Ausführungsbeispiel können die Absolutsignale bzw. Abstandssignale der Absolutspulenanordnungen der einzelnen Segmentspulenanordnungen eins zu eins den Differenzsignalen der Differenzspulenanordnung der jeweiligen Segmentspulenanordnung zugeordnet sein. Dies ist aber nicht zwingend. Es ist z.B. möglich, Absolutsignale nur von einer kleineren Anzahl ausgewählter Absolutspulenanordnungen auf Abstandsinformation auszuwerten. Beispielsweise kann es ausreichen, wenn nur vier Abstandssignale aus vier unterschiedlichen (z.B. paarweise gegenüberliegenden) Absolutspulenanordnungen ermittelt werden, die dann software-gesteuert bei der Verarbeitung der Differenzsignale aller acht Differenzspulenanordnungen berücksichtigt werden.

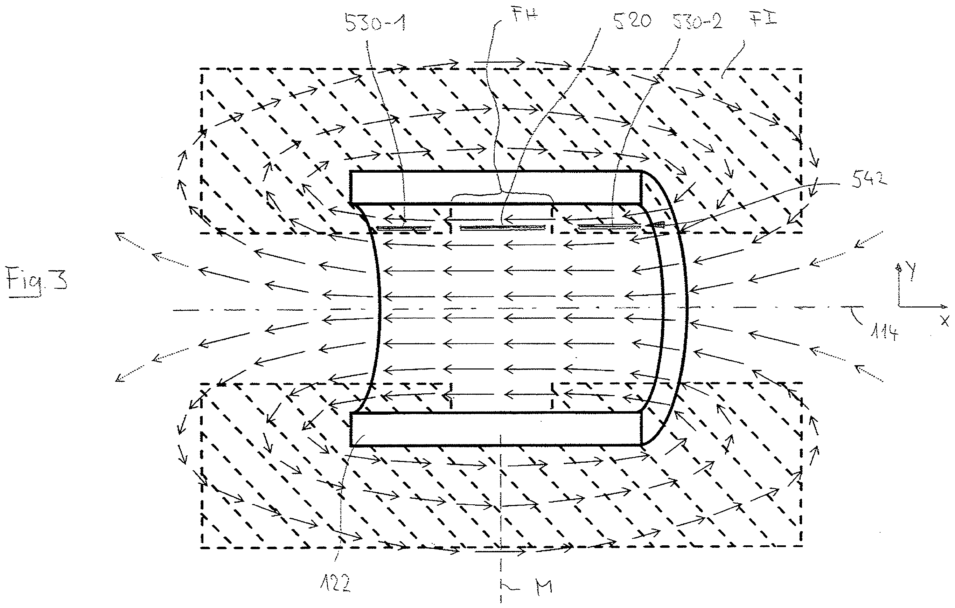

Anhand der Fig. 3 bis 6 wird erläutert, wie bei Ausführungsformen der Erfindung segmentierte Absolutspulenanordnungen genutzt werden können, um Abstandssignale zu erzeugen. Fig. 3 zeigt hierzu einen Längsschnitt durch eine kreiszylindrisch geformte Erregerspule 122 parallel zur Zentralachse 114 bzw. zur Durchlaufrichtung eines zu prüfenden Langprodukts. Die Erregerspule bildet einen in Umfangsrichtung mit Wechselstrom durchflossenen elektrischen Leiter, der ein elektromagnetisches Wechselfeld erzeugt, dessen magnetische Feldlinien (Pfeile) im Wesentlichen senkrecht zur Stromflussrichtung um die Erregerspule herum verlaufen. Dabei entsteht symmetrisch um die axiale Mittelebene M der Erregerspule bzw. symmetrisch zur zentrischen Spulenebene ein im Wesentlichen homogener Feldbereich FH, in welchem die magnetischen Feldlinien weitestgehend parallel zur Durchlaufrichtung bzw. senkrecht zur Spulenebene der Erregerspule verlaufen. Zu beiden axialen Enden schließt sich an den homogenen Feldbereich FH ein inhomogener Feldbereich FI an, in welchem das Feld der Magnetfeldlinien inhomogen ist in der Weise, dass die Feldlinien nicht parallel zueinander und parallel zur Zentralachse verlaufen.

In der Nähe der axialen Enden der Erregerspule sowie im Rücklaufbereich der Feldlinien außerhalb der Erregerspule hat das magnetische Feld B nicht nur eine x-Komponente parallel zur Zentralachse der Erregerspule, sondern auch eine endliche y-Komponente in Radialrichtung zur Zentralachse. Fig. 4 zeigt schematisch die Komponenten Bₓ und By des Magnetfeldes. In Fig. 3 ist der inhomogen Feldbereich, welcher teilweise bis in das Innere der Erregerspule reicht und den äußeren Rückflussbereich umfasst, gestrichelt hervorgehoben. Der homogene Feldbereich hat keine Schraffur. Der inhomogene Feldbereich ist für die Positionierung einer Absolutspulenanordnung zur Abstandskompensation denkbar.

Bei Ausführungsformen der Erfindung werden segmentierte Absolutspulenanordnungen als Abstandssensoren genutzt, welche nicht in konventioneller Weise diejenigen Feldlinien nutzen, die parallel zur Durchgangsrichtung des zu prüfenden Langprodukts verlaufen, sondern die senkrecht dazu stehenden Komponenten der Magnetfeldlinien, also die y-Komponenten. Dabei wird ausgenutzt, dass sich abhängig von der Lage des zu prüfenden Langprodukts Veränderungen des Absolutfeldes und des Gradientenfeldes ergeben, die sich im inhomogenen Feldbereich erfassen lassen. Dabei wird im Wesentlichen das von der Erregerspule erzeugte primäre Magnetfeld erfasst, welches jedoch von im Langprodukt erzeugten Wirbelstrommagnetfeldern gestört und dadurch vermindert wird, gemessen. Die Messung erfolgt nicht im annähernd homogenen Bereich FH, sondern im inhomogenen Rückflussbereich, wo kein homogenes Feld herrscht, sondern ein Gradientenfeld, welches sich durch die Exzentrizität des zu prüfenden Langprodukts ändern kann. Ein Grund hierfür ist der Proximity-Effekt, welcher unterschiedliche Wirbelströme abhängig von der Exzentrizität im Langprodukt erzeugt und damit auch die magnetischen Feldlinien im Rückflussbereich beeinflusst.

Bei konventionellen umfassenden Absolutspulen, die das zu prüfende Langprodukt umschließen, löschen sich diese Effekte innerhalb der Spule weitestgehend aus, so dass evtl. resultierende Signale keinen verwertbaren Rückschluss auf eine eventuelle Exzentrizität des durchlaufenden Langprodukts erlauben. Bei Ausführungsformen der Erfindung können dagegen Änderungen im Gradientenfeld zur Abstandsdetektion erfasst und in Form von Abstandssignalen verarbeitet werden.

Fig. 5 zeigt hierzu eine schräg perspektivische schematische Ansicht einer Ausführungsform einer Segmentspulenanordnung 542, die auf einer der Schalen der Durchlaufspulenanordnung angeordnet ist. Auf einem zylindrisch gekrümmten, elektrisch isolierenden Trägerelement 510 sind, elektrisch voneinander isoliert, eine Differenzspulenanordnung 520 und eine Absolutspulenanordnung 530 angeordnet. Die Absolutspulenanordnung hat auf einer axialen Seite der Differenzspulenanordnung eine erste Teilspulenanordnung 530-1 und auf der gegenüberliegenden axialen Seite eine zweite Teilspulenanordnung 530-2. Die Wicklungen der beiden Teilspulenanordnungen sind gegensinnig zueinander geschaltet.

In Fig. 3 ist die Einbausituation der Segmentspulenanordnung 542 innerhalb der Erregerspule 122 gezeigt. Es ist erkennbar, dass die Segmentspulenanordnung in Bezug auf die Spulenebene der Erregerspulenanordnung (Mittelebene M) im eingebauten Zustand so angeordnet ist, dass die Differenzspulenanordnung 520 symmetrisch zur Spulenebene im homogenen Feldbereich FH der Erregerspule liegt. Die zu den axialen Enden anschließenden Teilspulenanordnungen der Absolutspulenanordnung liegen dagegen bereits im inhomogenen Feldbereich FI, so dass die durch die Wicklungen der Teilspulenanordnungen definierte Spulenfläche von den radial zur Zentralachse verlaufenden y-Komponenten der magnetischen Feldlinien durchdrungen werden.

Entscheidend für die Funktion der Absolutspulenanordnung als Abstandssensor ist nun, dass die beiden Teilspulenanordnungen 530-1 und 530-2 vom inhomogenen Feld in unterschiedlichen Feldlinienrichtungen durchsetzt werden (siehe kreisförmige Feldsymbole in Fig. 5). Die y-Komponenten des B-Feldes induzieren dabei Spannungen. Bei einer Reihenschaltung der Teilspulenanordnungen würde sich eine teilweise oder vollständige Auslöschung der in den Spulen induzierten Spannungen ergeben. Durch die hier vorgesehene gegensinnige Schaltung wird dagegen erreicht, dass sich die in den beiden Teilspulenanordnungen induzierten Spannungen addieren, so dass sich auf Basis der Änderungen des Gradientenfeldes ein starkes Absolutsignal ABS ergibt. Ein zusätzlicher Vorteil dieses Aufbaus der Absolutspulenanordnung symmetrisch zur Mittelebene M der Erregerspule liegt darin, dass kein negativer Einfluss auf die Fehlerdetektion ausgeübt wird.

Die Absolutspulenanordnung 530 ist bei fertig montierter Prüfvorrichtung an eine in die Auswerteeinrichtung 150 integrierte Abstandsauswerteeinheit 152 angeschlossen.

An den Anschlussenden der Differenzspulenanordnung 520 liegt ein Differenzsignal DIFF an. Dieses wird ebenfalls in der Auswerteeinheit 150 ausgewertet.

Bei Einbringen eines Langprodukte und einer damit verbundenen Erzeugung eines sekundären Magnetfeldes aufgrund der im Langprodukt entstehenden Wirbelströme verändert sich die Feldlinienverteilung. Bei einer zur Zentralachse der Durchlaufspulenanordnung zentrischen Lage des Langprodukts würde die Feldlinienverschiebung an jeder Stelle gleich sein. Bei nicht-zentrischer Lage des Langprodukts resultiert dagegen eine nicht-symmetrische Feldlinienverteilung, welche von den als Abstandssonden wirkenden Absolutspulenanordnungen detektiert werden kann.

Bei dieser Ausführungsform wird die Absolutspulenanordnung durch Wicklungen gebildet, welche auf den ersten Blick einen Differenzsondencharakter zu haben scheinen. Aufgrund der unterschiedlichen Durchstoßrichtungen der ausgenutzten Feldlinien ergibt sich jedoch ein Absolutspulencharakter, wodurch eine neuartige Art von Abstandssonden realisiert wird.

Als Alternative zu der bildlich dargestellten Anordnung mit zwei symmetrisch zur Spulenebene angeordneten Teilspulenanordnungen der Absolutspulenanordnung ist es auch möglich, nur an einer Seite der Differenzspulenanordnung (Eintrittsseite oder Austrittsseite der Durchlaufspulenanordnung) eine Absolutspulenanordnung anzubringen, welche die in Radialrichtung verlaufenden Komponenten der magnetischen Feldlinien zur Signalerzeugung nutzt.

Eine Absolutspulenanordnung kann auch im äußeren Rückflussbereich des Feldes der Erregerspule (siehe Schraffur) liegen.

Die Windungen der Absolutspulenanordnung können auf einer gemeinsamen zylindrischen Fläche, also auf dem gleichen Radius liegen. Es ist auch möglich, dass Teile der Absolutspulenanordnung auf unterschiedlichen radialen Abständen zur Zentralachse liegen. Die Form der Schleifen bzw. Wicklungen kann entsprechend dem Anwendungsfall gewählt werden. Neben den schematisch dargestellten ovalen Formen sind z.B. auch runde Formen oder polygonale Formen von Windungen möglich. Die Größe der Absolutspulenanordnungen, also deren laterale Ausdehnung in Umfangsrichtung, kann dem Einsatzfall angepasst werden. Wie in Fig. 5 gezeigt, kann die Ausdehnung der Absolutspulenanordnungen in Umfangsrichtung wesentlich kleiner sein als diejenige der Differenzspulenanordnungen, die sich in Summe über mehrere Schalen in Umfangsrichtung zu einer vollständigen Überlappung bzw. zu einer Erfassung des gesamten Umfangs des Prüflings ergänzen sollen. Dies ist bei den Absolutspulenanordnungen nicht erforderlich und in der Regel auch nicht gewünscht. Zur genauen Bestimmung des Abstandes ohne Beeinträchtigung durch Fehler in der Materialoberfläche können sehr kurze Längen in Umfangsrichtung, ggf. sogar nahezu punktförmige Abstandssonden, günstig sein. Eine gewisse physikalische Ausdehnung ist jedoch gewünscht, damit die in den Schleifen induzierten Spannungen ausreichend groß für eine zuverlässige Auswertung werden.

Bei einer typischen Ausführungsform sind in Umfangsrichtung segmentierte Absolutspulenanordnungen vorhanden, wobei jede Absolutspulenanordnung nur einen Teil des Umfangs des Prüflings abdeckt. Die Absolutspulenanordnungen überlappen dabei in der Regel in Umfangsrichtung nicht. Die Absolutspulenanordnungen dienen als Abstandssonden. Hierbei ist eine gesonderte, das Langprodukt umschließende Absolutspule zur Fehlerdetektion nicht vorgesehen.

Optional kann eine parametrische Detektion eines Standard-Absolutsignals über den kompletten Umfang der Durchlaufspulenanordnung mit Hilfe der Erregerspule 122 vorgesehen sein. Die Erregerspule fungiert dabei als parametrische Absolutspule, wobei die Erregung und die Erfassung mit der gleichen Komponente erfolgt und die Impedanzänderung ausgewertet wird.

Bei anderen Ausführungsformen kann eine von den Segmentspulenanordnungen und der Erregerspulenanordnung gesonderte, das Langprodukt umschließende Absolutspule vorgesehen sein.

Zusätzlich zu den hier im Detail diskutierten Ausführungsbeispielen sind im Rahmen der Erfindung zahlreiche Varianten möglich. Beispielsweise kann eine Durchlaufspulenanordnung mehr als zwei Schalen mit Differenzspulenanordnungen aufweisen. Es ist möglich, dass eine Durchlaufspulenanordnung ohne Absolutspulenanordnungen allein mit Differenzspulenanordnungen arbeitet. Es können Segmentspulenanordnungen ohne Absolutspulenanordnung mit Segmentspulenanordnungen mit Absolutspulenanordnungen kombiniert sein.

Wenn nur eine Bestimmung von Durchmesser, Durchmesserform, Durchmesserschwankung und/oder Exzentrizität der Lage des Prüflings beim Durchlauf gewünscht ist, könnte die Durchlaufspulenanordnung auch ohne Differenzspulenanordnungen, d.h. nur mit segmentierten Absolutspulenanordnungen aufgebaut und/oder genutzt werden. Eine vollständige oder eine auf bestimmte Fehlertypen optimierte Defektprüfung könnte dann ggf. mit einem separaten Prüfgerät durchgeführt werden.

Hierbei könnte zusätzlich zur Bewertung des Fehlersignals auch oder nur eine mechanische Korrektur der Lage des Langprodukts anhand der erhaltenen Daten unternommen werden.

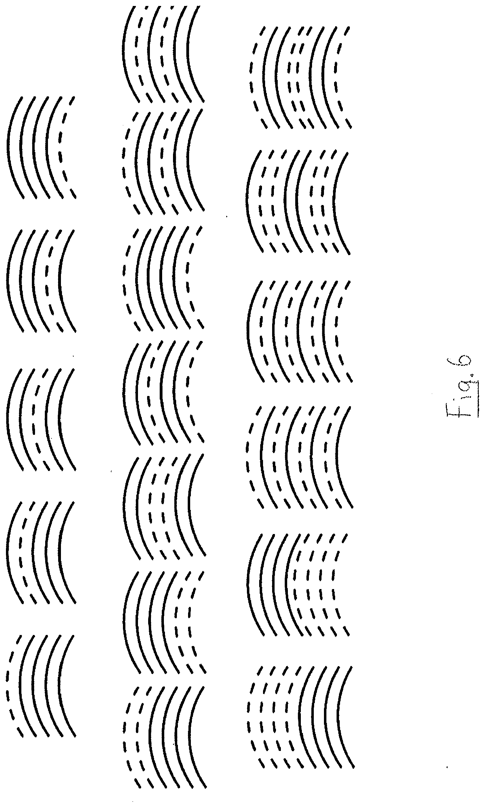

Fig. 6 zeigt beispielhaft eine Reihe von Varianten, bei denen jeweils vier Schalen mit Differenzspulenanordnungen mit einer oder mehreren Schalen mit Absolutspulenanordnungen kombiniert sind. Die Nutzung von Absolutspulenanordnungen erlaubt hierbei bei Bedarf eine Abstandskompensation. Die durchgezogenen Linien repräsentieren dabei Schalen, die nur Differenzspulenanordnungen aufweisen. Die gestrichelten Linien repräsentieren Schalen, die nur Absolutspulenanordnungen zur Abstandsdetektion aufweisen. Wie im Zusammenhang mit Fig. 5 bereits erläutert, müssen Absolutspulenanordnungen und Differenzspulenanordnungen nicht auf unterschiedlichen Schalen liegen, sondern können auch auf ein und derselben Schale mit dem gleichen Abstand zur Zentralachse liegen. Durch Kenntnis des charakteristischen Abstandsverhaltens sowohl von Differenzkanälen als auch von Abstandskanälen ist es mit Hilfe geeigneter Hardwarekomponenten und/oder mit Hilfe geeigneter Auswertesoftware möglich, eine Kompensation des auf Exzentrizität des Langprodukts begründeten unterschiedlichen Sensitivitätsverhaltens bei der Fehlererkennung zu erreichen.

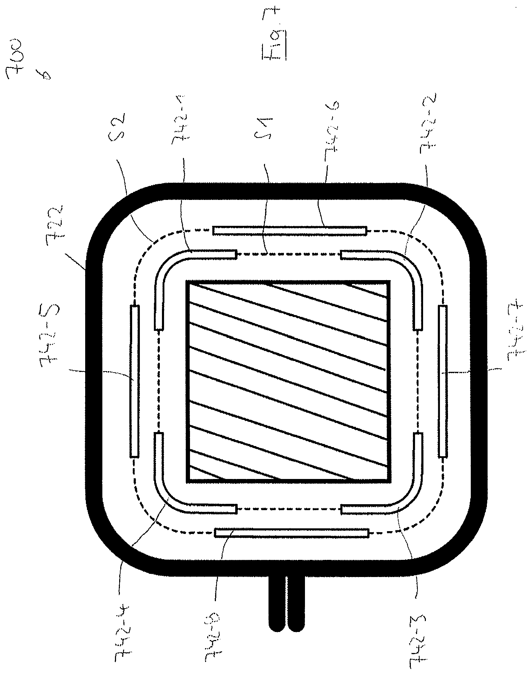

Die Erfindung ist nicht auf Durchlaufspulenanordnungen mit kreisförmigem Querschnitt beschränkt. Fig. 7 zeigt ein Ausführungsbeispiel einer nicht-runden, formangepassten Durchlaufspulenanordnung 700, die zur Prüfung von Langprodukten mit Rechteckquerschnitt, insbesondere mit quadratischem Querschnitt, ausgelegt ist. Komponenten und Merkmale ähnlicher oder gleicher Funktion wie in Fig. 2 tragen die gleichen Bezugszeichen, erhöht um 600.

Die Erregerspule 722 und die Schalen S1 und S2 haben jeweils annähernd quadratische Form mit abgerundeten Ecken. Die vier ebenen Segmentspulenanordnungen 742-5 bis 742-8 der äußeren zweiten Schale S2 prüfen die ebenen Seitenflächen des Langprodukts bis in die Nähe der Längskanten. Die Kantenbereiche werden von den ersten Segmentspulenanordnungen 742-1 bis 742-4 der inneren ersten Schale S1 erfasst. Diese sind winklig gestaltet, wobei zwischen den in 90° zueinander stehenden ebenen Schenkeln ein kreisbogenförmig gekrümmter Mittelabschnitt liegt. Die elektrischen Anschlüsse und die Auswertemöglichkeiten sind analog zur denjenigen des ersten Ausführungsbeispiels.

Wie schon erwähnt, lassen sich quadratische und andere polygonale Querschnitte (z.B. Sechskantstab) in manchen Fällen auch mit einer kreisrunden Anordnung segmentierter Spulen (vgl. beispielsweise Fig. 1,2) prüfen.

## Patentansprüche

1. Durchlaufspulenanordnung (100) zur Verwendung in einer Prüfvorrichtung zum Prüfen von Langprodukten im Durchlaufverfahren mittels Wirbelstrom umfassend:
eine Erregerspulenanordnung mit einer Erregerspule (122), die eine Durchlassöffnung (112) zum Hindurchführen eines Langprodukts (190) entlang einer Durchlaufrichtung (192) umschließt, wobei die Erregerspulenanordnung eine Anschlusseinrichtung zum Anschluss der Erregerspule an eine Wechselspannungsquelle (130) aufweist; und
eine um die Durchlassöffnung herum angeordnete Empfängerspulenanordnung, die eine Anschlusseinrichtung (148) zum Anschluss der Empfängerspulenanordnung an eine Auswerteeinrichtung (150) der Prüfvorrichtung aufweist,
wobei die Empfängerspulenanordnung zwei oder mehr über den Umfang der Durchlassöffnung (112) verteilte Segmentspulenanordnungen (142-1 bis 142-8, 742-1 bis 742-8) aufweist, wobei jede Segmentspulenanordnung einen Erfassungsbereich hat, der nur einen Umfangsabschnitt des Umfangs der Oberfläche des Langprodukts abdeckt, **dadurch gekennzeichnet, dass**
die Segmentspulenanordnungen (142-1 bis 142-8, 742-1 bis 742-8) auf mindestens zwei die Durchlassöffnung umschließenden Schalen (S1, S2) mit unterschiedlichen Abständen (A1, A2) zu einer Referenzachse (114) der Durchlaufspulenanordnung verteilt sind,
wobei erste Segmentspulenanordnungen (142-1 bis 142-4, 742-1 bis 742-4) ohne gegenseitige Überlappung auf einer ersten Schale (S1) angeordnet sind,
zweite Segmentspulenanordnungen (142-5 bis 142-8, 742-5 bis 742-8) ohne gegenseitige Überlappung auf einer zweiten Schale (S2) angeordnet sind, und
erste und zweite Segmentspulenanordnungen in Umfangsrichtung derart umfangsversetzt zueinander angeordnet sind, dass die zweiten Segmentspulenanordnungen Umfangsabschnitte erfassen, welche nicht von den ersten Segmentspulenanordnungen abgedeckt werden.

2. Durchlaufspulenanordnung nach Anspruch 1, **dadurch gekennzeichnet, dass** erste Segmentspulenanordnungen (142-1 bis 142-4) in einem ersten radialen Abstand (A1) zu einer zentralen Referenzachse auf einer kreiszylindrischen ersten Schale (S1) angeordnet sind und zweite Segmentspulenanordnungen (142-5 bis 142-8) in einem vom ersten radialen Abstand abweichenden zweiten radialen Abstand (A2) zu der zentralen Referenzachse auf einer kreiszylindrischen zweiten Schale (S2) angeordnet sind.

3. Durchlaufspulenanordnung nach Anspruch 1, **dadurch gekennzeichnet, dass** die Schalen (S1, S2) eine von der Kreisform abweichende Querschnittsform haben, vorzugsweise eine ovale Querschnittsform, eine eiförmige Querschnittsform oder eine polygonale Querschnittsform, insbesondere eine quadratische Querschnittsform mit abgerundeten Eckbereichen.

4. Durchlaufspulenanordnung nach einem der vorhergehenden Ansprüche, **dadurch gekennzeichnet, dass** auf einer Schale, insbesondere auf jeder Schale (S1, S2), eine gerade Anzahl von Segmentspulenanordnungen angeordnet ist und/oder dass auf einer Schale, mehreren Schalen oder allen Schalen mindestens ein Paar von diametral gegenüberliegenden Segmentspulenanordnungen vorgesehen ist.

5. Durchlaufspulenanordnung nach einem der vorhergehenden Ansprüche, **dadurch gekennzeichnet, dass** alle Segmentspulenanordnungen (142-1 bis 142-8, 742-1 bis 742-8) jeweils eine Differenzspulenanordnung aufweisen, wobei die Differenzspulenanordnungen vorzugsweise derart angeordnet sind, dass am gesamten Umfang eines Langprodukts Differenzsignale erfassbar sind.

6. Durchlaufspulenanordnung nach einem der vorhergehenden Ansprüche, **dadurch gekennzeichnet, dass** eine Segmentspulenanordnung (542) eine Differenzspulenanordnung (520) und eine Absolutspulenanordnung (530) aufweist, wobei vorzugsweise alle Segmentspulenanordnungen eine Differenzspulenanordnung und eine Absolutspulenanordnung aufweisen.

7. Durchlaufspulenanordnung nach Anspruch 6, **dadurch gekennzeichnet, dass** die Differenzspulenanordnung (520) und die Absolutspulenanordnung (530) an einem gemeinsamen Trägerelement (510) angeordnet sind, wobei vorzugsweise das Trägerelement (510) eine innere Oberfläche und eine äußere Oberfläche aufweist, wobei eine Differenzspulenanordnung (520) und eine Absolutspulenanordnung (530) an der gleichen Oberfläche des Trägerelements angeordnet sind.

8. Durchlaufspulenanordnung nach einem der vorhergehenden Ansprüche, **dadurch gekennzeichnet, dass** bei einer Segmentspulenanordnung (542) die Differenzspulenanordnung (520) symmetrisch zu einer einer Mittelebene (M) der Erregerspulenanordnung ensprechenden Spulenebene der Erregerspulenanordnung (122) angeordnet ist und die Absolutspulenanordnung (530) unsymmetrisch zur Spulenebene mindestens zum Teil in einem inhomogenen Feldbereich (FI) des von der Erregerspulenanordnung erzeugten Feldes angeordnet ist.

9. Durchlaufspulenanordnung nach einem der vorhergehenden Ansprüche, **dadurch gekennzeichnet, dass** eine Absolutspulenanordnung (530) symmetrisch zu einer einer Mittelebene (M) der Erregerspulenanordnung entsprechenden Spulenebene der Erregerspulenanordnung (122) in einem ersten inhomogenen Feldbereich vor der Spulenebene eine erste Teilspulenanordnung (530-1) und in einem zweiten inhomogenen Feldbereich hinter der Spulenebene eine zweite Teilspulenanordnung (530-2) aufweist, wobei die erste und die zweite Teilspulenanordnung gegensinnig geschaltet sind.

10. Durchlaufspulenanordnung nach einem der vorhergehenden Ansprüche, **dadurch gekennzeichnet, dass** mehrere umfangsversetzte Absolutspulenanordnungen, insbesondere alle Absolutspulenanordnungen, an eine Abstandsauswerteeinrichtung (152) zur Verarbeitung eines an einer Absolutspulenanordnung erzeugten Abstandssignals angeschlossen sind.

11. Durchlaufspulenanordnung nach einem der vorhergehenden Ansprüche, **dadurch gekennzeichnet, dass** die Erregerspule (122, 722) eine Flachbandspule ist, die eine einzige Windung hat.

12. Prüfverfahren zur Prüfung von Langprodukten, bei dem ein Langprodukt entlang einer Durchlaufrichtung durch eine Durchlaufspulenanordnung bewegt wird, **dadurch gekennzeichnet, dass** eine Durchlaufspulenanordnung gemäß einem der vorhergehenden Ansprüche verwendet wird.

13. Prüfverfahren nach Anspruch 12, **gekennzeichnet durch** eine gemeinsame Auswertung von Absolutsignalen von paarweise diametral gegenüberliegenden Segmentspulenanordnungen, wobei vorzugsweise die gemeinsame Auswertung die Ermittlung eines Summensignals von Absolutsignalen und/oder Differenzsignalen der paarweise diametral gegenüberliegenden Segmentspulenanordnungen umfasst.

14. Prüfverfahren nach Anspruch 12 oder 13, **dadurch gekennzeichnet, dass** Absolutsignale mehrerer um den Umfang verteilter Absolutspulenanordnungen zur Abstandskompensation genutzt werden und/oder dass aus Absolutsignalen mehrerer um den Umfang verteilter Absolutspulenanordnungen eine Information über Durchmesser, Prüfteilgeometrie, Unrundheit und/oder Achsversatz zwischen der Durchlaufspulenanordnung und dem Prüfgegenstand ermittelt wird.

15. Prüfvorrichtung zur Prüfung von Langprodukten, die entlang einer Durchlaufrichtung durch eine Durchlaufspulenanordnung bewegt werden,
**dadurch gekennzeichnet, dass** die Prüfvorrichtung eine Durchlaufspulenanordnung gemäß einem der Ansprüche 1 bis 11 aufweist und/oder zur Durchführung des Prüfverfahrens nach einem der Ansprüche 12 bis 14 konfiguriert ist.

## Claims

1. Feed-through coil arrangement (100) for use in a test apparatus for testing long products in a feed-through method by means of eddy current, comprising:
an exciter coil arrangement with an exciter coil (122) which surrounds a passage opening (112) for feeding-through a long product (190) along a feed-through direction (192), wherein the exciter coil arrangement comprises a connection device for connecting the exciter coil to an alternating current source (130); and
a receiver coil arrangement arranged around the passage opening, which comprises a connection device (148) for connecting the receiver coil arrangement to an evaluation device (150) of the test apparatus,
wherein the receiver coil arrangement comprises two or more segment coil arrangements (142-1 to 142-8, 742-1 to 742-8) distributed over the circumference of the passage opening (112), wherein each segment coil arrangement has a detection range that only covers a circumferential section of the circumference of the surface of the long product,
**characterized in that**
the segment coil arrangements (142-1 to 142-8, 742-1 to 742-8) are distributed over at least two shells (S1, S2) surrounding the passage opening at different distances (A1, A2) to a reference axis (114) of the feed-through coil arrangement,
wherein first segment coil arrangements (142-1 to 142-4, 742-1 to 742-4) are arranged on a first shell (S1) without reciprocal overlapping,
second segment coil arrangements (142-5 to 142-8, 742-5 to 742-8) are arranged on a second shell (S2) without reciprocal overlapping, and
first and second segment coil arrangements are arranged circumferentially offset to one another in circumferential direction such that the second segment coil arrangements detect circumferential sections that are not covered by the first segment coil arrangements.

2. Feed-through coil arrangement according to claim 1, **characterized in that** first segment coil arrangements (142-1 to 142-4) are arranged at a first radial distance (A1) to a central reference axis on a circular-cylindrical first shell (S1) and second segment coil arrangements (142-5 to 142-8) are arranged at a second radial distance (A2) to the central reference axis different from the first radial distance on a circular cylindrical second shell (S2).

3. Feed-through coil arrangement according to claim 1, **characterized in that** the shells (S1, S2) have a cross-sectional shape deviating from the circular shape, preferably an oval cross-sectional shape, an egg-shaped cross-sectional shape or a polygonal cross-sectional shape, in particular a square-shaped cross-sectional shape having rounded corner regions.

4. Feed-through coil arrangement according to any of the preceding claims, **characterized in that** on a shell, in particular on each shell (S1, S2), an even number of segment coil arrangements is arranged and/or **in that** on one shell, a plurality of shells or all shells at least one pair of diametrically opposite segment coil arrangements is provided.

5. Feed-through coil arrangement according to any of the preceding claims, **characterized in that** all segment coil arrangements (142-1 to 142-8, 742-1 to 742-8) in each case comprise a differential coil arrangement, wherein the differential coil arrangements are preferably arranged such that differential signals are detectable on the entire circumference of the long product.

6. Feed-through coil arrangement according to any of the preceding claims, **characterized in that** a segment coil arrangement (542) comprises a differential coil arrangement (520) and an absolute coil arrangement (530), wherein preferably all segment coil arrangements comprise a differential coil arrangement and an absolute coil arrangement.

7. Feed-through coil arrangement according to claim 6, **characterized in that** the differential coil arrangement (520) and the absolute coil arrangement (530) are arranged on a common support element (510), wherein preferably the support element (510) comprises an inner surface and an outer surface, wherein a differential coil arrangement (520) and an absolute coil arrangement (530) are arranged at the same surface of the support element.

8. Feed-through coil arrangement according to any of the preceding claims, **characterized in that**, in a segment coil arrangement (542), the differential coil arrangement (520) is arranged symmetrically to a coil plane of the exciter coil arrangement (122) corresponding to a centre plane (M) of the exciter coil arrangement and the absolute coil arrangement (530) is arranged unsymmetrically to the coil plane and at least partially in an inhomogeneous field region (FI) of the field generated by the exciter coil arrangement.

9. Feed-through coil arrangement according to any of the preceding claims, **characterized in that** an absolute coil arrangement (530) comprises symmetrically to a coil plane of the exciter coil arrangement (122) corresponding to a centre plane (M) of the exciter coil arrangement in a first inhomogeneous field region in front of the coil plane a first partial coil arrangement (530-1) and in a second inhomogeneous field region behind the coil plane a second partial coil arrangement (530-2), wherein the first and the second partial coil arrangements are connected in opposite directions.

10. Feed-through coil arrangement according to any of the preceding claims, **characterized in that** a plurality of circumferentially offset absolute coil arrangements, in particular all absolute coil arrangements, are connected to a distance evaluation device (152) for processing of a distance signal generated on an absolute coil arrangement.

11. Feed-through coil arrangement according to any of the preceding claims, **characterized in that** the exciter coil (122, 722) is a flat ribbon coil having one single winding.

12. Test method for testing long products, wherein a long product is moved along a feed-through direction through a feed-through coil arrangement, **characterized in that** a feed-through coil arrangement according to any one of the preceding claims is used.

13. Test method according to claim 12, **characterized by** a common evaluation of absolute signals of pairwise diametrically opposed segment coil arrangements, wherein preferably the common evaluation comprises the determination of a sum signal of absolute signals and/or differential signals of the pairwise diametrically opposite segment coil arrangements.

14. Test method according to claim 12 or 13, **characterized in that** absolute signals of a plurality of absolute coil arrangements distributed over the circumference are used for distance compensation and/or **in that** information regarding diameter, test specimen geometry, out-of-roundness and/or axis offset between the feed-through coil arrangement and the test object are determined from absolute signals of a plurality of absolute coil arrangements distributed over the circumference.

15. Test apparatus for testing long products which are moved along a feed-through direction through a feed-through coil arrangement, **characterized in that** the test apparatus comprises a feed-through coil arrangement according to any one of claims 1 to 11 and/or is configured for conducting the test method according to any one of claims 12 to 14.

## Revendications

1. Agencement de bobines à passage traversant (100) à utiliser dans un appareil de contrôle pour le contrôle de produits longs par un procédé continu au moyen de courants de Foucault, comprenant:
un agencement de bobine d'excitation avec une bobine d'excitation (122), qui entoure une ouverture de passage (112) pour le passage d'un produit long (190) le long d'une direction de défilement (192), dans lequel l'agencement de bobine d'excitation présente un dispositif de raccordement pour le raccordement de la bobine d'excitation à une source de courant alternatif (130); et
un agencement de bobine de réception disposé autour de l'ouverture de passage, qui présente un dispositif de raccordement (148) pour le raccordement de l'agencement de bobine de réception à un dispositif d'évaluation (150) de l'appareil de contrôle,
dans lequel l'agencement de bobine de réception présente deux ou plusieurs agencements de bobines segmentées (142-1 à 142-8, 742-1 à 742-8) répartis sur la périphérie de l'ouverture de passage (112), dans lequel chaque agencement de bobine segmentée a une zone de détection, qui ne recouvre qu'une partie périphérique de la périphérie de la surface du produit long,
**caractérisé en ce que**
les agencements de bobines segmentées (142-1 à 142-8, 742-1 à 742-8) sont répartis sur au moins deux coquilles (S1, S2) entourant l'ouverture de passage avec des distances différentes (A1, A2) par rapport à un axe de référence (114) de l'agencement de bobines à passage traversant,
dans lequel des premiers agencements de bobines segmentées (142-1 à 142-4, 742-1 à 742-4) sont disposés sans recouvrement mutuel sur une première coquille (S1),
des deuxièmes agencements de bobines segmentées (142-5 à 142-8, 742-5 à 742-8) sont disposés sans recouvrement mutuel sur une deuxième coquille (S2), et
des premiers et des deuxièmes agencements de bobines segmentées sont disposés avec un décalage périphérique en direction périphérique les uns par rapport aux autres, de telle manière que les deuxièmes agencements de bobines segmentées détectent des parties périphériques, qui ne sont pas couvertes par les premiers agencements de bobines segmentées.

2. Agencement de bobines à passage traversant selon la revendication 1, **caractérisé en ce que** des premiers agencements de bobines segmentées (142-1 à 142-4) sont disposés sur une première coquille cylindrique ronde (S1) à une première distance radiale (A1) par rapport à un axe de référence central et des deuxièmes agencements de bobines segmentées (142-5 à 142-8) sont disposés sur une deuxième coquille cylindrique ronde (S2) à une deuxième distance radiale (A2) par rapport à l'axe de référence central différente de la première distance radiale.

3. Agencement de bobines à passage traversant selon la revendication 1, **caractérisé en ce que** les coquilles (S1, S2) ont une forme de section transversale différente de la forme circulaire, de préférence une forme de section transversale ovale, une forme de section transversale ovoïde ou une forme de section transversale polygonale, en particulier une forme de section transversale carrée avec des zones d'angle arrondies.

4. Agencement de bobines à passage traversant selon l'une quelconque des revendications précédentes, **caractérisé en ce qu'**un nombre pair d'agencements de bobines segmentées sont disposés sur une coquille, en particulier sur chaque coquille (S1, S2), et/ou **en ce qu'**il est prévu au moins une paire d'agencements de bobines segmentées diamétralement opposés sur une coquille, sur plusieurs coquilles ou sur toutes les coquilles.

5. Agencement de bobines à passage traversant selon l'une quelconque des revendications précédentes, **caractérisé en ce que** tous les agencements de bobines segmentées (142-1 à 142-8, 742-1 à 742-8) présentent respectivement un agencement de bobines différentielles, dans lequel les agencements de bobines différentielles sont de préférence disposés de telle manière que des signaux différentiels puissent être détectés sur toute la périphérie d'un produit long.

6. Agencement de bobines à passage traversant selon l'une quelconque des revendications précédentes, **caractérisé en ce qu'**un agencement de bobine segmentée (542) présente un agencement de bobine différentielle (520) et un agencement de bobine absolue (530), dans lequel de préférence tous les agencements de bobines segmentées présentent un agencement de bobine différentielle et un agencement de bobine absolue.

7. Agencement de bobines à passage traversant selon la revendication 6, **caractérisé en ce que** l'agencement de bobine différentielle (520) et l'agencement de bobine absolue (530) sont disposés sur un élément de support commun (510), dans lequel l'élément de support (510) présente de préférence une surface intérieure et une surface extérieure, dans lequel un agencement de bobine différentielle (520) et un agencement de bobine absolue (530) sont disposés sur la même surface de l'élément de support.

8. Agencement de bobines à passage traversant selon l'une quelconque des revendications précédentes, **caractérisé en ce que** dans un agencement de bobine segmentée (542), l'agencement de bobine différentielle (520) est disposé de façon symétrique par rapport à un plan de bobine de l'agencement de bobine d'excitation (122) correspondant à un plan moyen (M) de l'agencement de bobine d'excitation et l'agencement de bobine absolue (530) est disposé de façon asymétrique par rapport au plan de bobine au moins en partie dans une région de champ non homogène (FI) du champ produit par l'agencement de bobine d'excitation.

9. Agencement de bobines à passage traversant selon l'une quelconque des revendications précédentes, **caractérisé en ce qu'**un agencement de bobine absolue (530) symétrique par rapport à un plan de bobine de l'agencement de bobine d'excitation (122) correspondant à un plan moyen (M) de l'agencement de bobine d'excitation présente dans une première région de champ non homogène devant le plan de bobine un premier agencement de bobine partiel (530-1) et dans une deuxième région de champ non homogène derrière le plan de bobine un deuxième agencement de bobine partiel (530-2), dans lequel le premier et le deuxième agencements de bobine partiels sont connectés en sens contraire.

10. Agencement de bobines à passage traversant selon l'une quelconque des revendications précédentes, **caractérisé en ce que** plusieurs agencements de bobines absolues décalés en périphérie, en particulier tous les agencements de bobines absolues, sont raccordés à un dispositif d'évaluation de distance (152) pour le traitement d'un signal de distance produit à un agencement de bobine absolue.

11. Agencement de bobines à passage traversant selon l'une quelconque des revendications précédentes, **caractérisé en ce que** la bobine d'excitation (122, 722) est une bobine en bande plate, qui ne comporte qu'une seule spire.

12. Procédé de contrôle pour le contrôle de produits longs, dans lequel on déplace un produit long le long d'une direction de défilement à travers un agencement de bobines à passage traversant, **caractérisé en ce que** l'on utilise un agencement de bobines à passage traversant selon l'une quelconque des revendications précédentes.

13. Procédé selon la revendication 12, **caractérisé par** une évaluation commune de signaux absolus d'agencements de bobines segmentées diamétralement opposés par paires, dans lequel l'évaluation commune comprend de préférence la détermination d'un signal de somme de signaux absolus et/ou de signaux différentiels des agencements de bobines segmentées diamétralement opposés par paires.

14. Procédé de contrôle selon la revendication 12 ou 13, **caractérisé en ce que** l'on utilise des signaux absolus de plusieurs agencements de bobines absolues répartis autour de la périphérie pour la compensation de distance et/ou **en ce que** l'on détermine à partir de signaux absolus de plusieurs agencements de bobines absolues répartis autour de la périphérie une information relative au diamètre, à la géométrie de l'échantillon, à l'ovalisation et/ou au décalage d'axe entre l'agencement de bobines à passage traversant et l'objet contrôlé.

15. Appareil de contrôle pour le contrôle de produits longs, qui se déplacent le long d'une direction de défilement à travers un agencement de bobines à passage traversant, **caractérisé en ce que** l'appareil de contrôle présente un agencement de bobines à passage traversant selon l'une quelconque des revendications 1 à 11 et/ou est configuré pour la mise en oeuvre du procédé de contrôle selon l'une quelconque des revendications 12 à 14.
